# EUROPÄISCHE PATENTSCHRIFT

(11) **EP 2 807 467 B1**
(45) Veröffentlichungstag und Bekanntmachung des Hinweises auf die Patenterteilung: **16.09.2015**
(21) Anmeldenummer: 13703720.6
(22) Anmeldetag: 15.01.2013
(51) Int. Cl.: G01J 3/45, G01J 3/28, G02B 1/11, E01H 5/04, G01N 21/41, G01N 21/45, G01M 11/00, G01J 3/453, G02B 5/08, G01N 21/25, G02B 1/115

(54) **VORRICHTUNG UND VERFAHREN ZUR OPTISCHEN ÜBERPRÜFUNG EINER PROBE**
DEVICE AND METHOD FOR OPTICAL INSPECTION OF A SAMPLE
DISPOSITIF ET PROCÉDÉ DE CONTRÔLE OPTIQUE D'UN ÉCHANTILLON

(30) Priorität: 17.01.2012 AT 472012
(43) Veröffentlichungstag der Anmeldung: 03.12.2014
(73) Patentinhaber: Femtolasers Produktions GmbH, 2100 Korneuburg (AT)
(72) Erfinder: TEMPEA, Gabriel-Florin, A-1070 Wien (AT)
(74) Vertreter: Sonn & Partner Patentanwälte
(86) Internationale Anmeldenummer: PCT/AT2013/050009
(87) Internationale Veröffentlichungsnummer: WO 2013/106876

(56) Entgegenhaltungen:
- US-B1- 6 486 961
- HLUBINA P ET AL: "Spectral interferometry and reflectometry used for characterization of a multilayer mirror", OPTICS LETTERS, OSA, OPTICAL SOCIETY OF AMERICA, WASHINGTON, DC, US, Bd. 34, Nr. 10, 15. Mai 2009 (2009-05-15), Seiten 1564-1566, XP001523933, ISSN: 0146-9592
- THORPE M ET AL: "Precise measurements of optical cavity dispersion and mirror coating properties via femtosecond combs", OPTICS EXPRESS, OSA (OPTICAL SOCIETY OF AMERICA), WASHINGTON DC, (US), Bd. 13, Nr. 3, 7. Februar 2005 (2005-02-07), Seiten 1-7, XP007915237, ISSN: 1094-4087

## Beschreibung

Die Erfindung betrifft ein Verfahren zur Ermittlung zumindest der Gruppenverzögerung einer Probe mittels spektraler Interferometrie gemäß dem Oberbegriff von Anspruch 1, sowie eine Vorrichtung zur Durchführung eines solchen Verfahrens gemäß der Oberbegriff von Anspruch 8.

Spektrale Interferometrie ist eine für die Optik- und Lasertechnik sehr bedeutende Messmethode. Sie wird u.a. zur Bestimmung der Oberflächenqualität von Optiken, in der Spektroskopie, für Dispersionsmessungen (V. N. Kumar and D. N. Rao, "Using interference in the frequency domain for precise determination of thickness and refractive indices of normal dispersive materials," J. Opt. Soc. Am. B 12, 1559-1563 <1995>), aber auch - im Zusammenhang mit einem nichtlinearen Effekt - zwecks Charakterisierung der Pulsdauer eingesetzt (C. Iaconis and I. A. Walmsley, "Spectral Phase Interferometry for Direct Electric-field Reconstruction of Ultrashort Optical Pulses," Optics Letters 23, 792-794 <1998>).

Zwei zeitlich relativ zueinander verzögerte Lichtstrahlen werden räumlich überlagert, und die Intensität der überlagerten Strahlen wird spektral aufgelöst gemessen. Das gemessene Spektrum weist eine Modulation (spektrales Interferenzmuster) auf; aus diesem spektralen Interferenzmuster können die Verzögerung zwischen den zwei Lichtsignalen und die Differenz zwischen den spektralen Phasen der zwei Lichtsignalen ermittelt werden. Diese Informationen werden aus dem spektralen Interferogramm mittels einer an sich bekannten, auf der Fast Fourier Transform (FFT; rasche Fouriertransformation) basierenden numerischen Methode ermittelt ("Interferogram Analysis", D. W. Robinson and G. T. Reid, Eds., Institute of Physics Publishing, Bristol <1993>, Seiten 141-193).

Aus dem Artikel P. Hlubina et al., "Spectral interferometry and reflectometry used for characterization of a multilayer mirror", Optics Letters Vol. 34, No. 10, May 15, 2009; S. 1564-1566, ist es bekannt, zur Messung der Gruppenverzögerung eines mehrschichtigen Spiegels mit einem Michelson-Interferometer das Spektrum des zu vermessenden Spiegels mit einem bekannten Spektrum eines Referenzspiegels zu überlagern und das resultierende Interferogramm mithilfe eines Spektrometers zu messen. Diese Methode entspricht der vorstehenden Beschreibung mit dem Unterschied, dass anstatt einer herkömmlichen Fast Fourier Transformation ein leicht geänderter Algorithmus namens "windowed Fourier transform" zwecks Berechnung der spektralen Phase aus dem Interferogramm eingesetzt wird. Um ausgehend von der spektralen Phase die Gruppenverzögerung zu erhalten, wird diese spektrale Phase numerisch nach der Kreisfrequenz abgeleitet.

Die US 6,486,961 B1 offenbart andererseits eine auf Nulldurchgängen basierende Methode zur Messung der Gruppenverzögerung optischer Komponenten; es handelt sich allerdings um Nulldurchgänge einer zeitabhängigen Funktion. Diese Funktion entspricht einem heterodynen Schwebungssignal, das beim Durchstimmen der Lichtquelle aufgenommen wird. Das Schwebungssignal ist somit ein zeitabhängiges Signal und stellt kein Interferogramm dar. Insbesondere sieht diese Methode den Einsatz eines durchstimmbaren Lasers vor, der während der Messung durchgestimmt wird.

Für manche Anwendungen (z.B. Dispersionsmessungen) ist es notwendig, nicht nur die spektrale Phase, sondern auch die Gruppenverzögerungsdispersion (Group Delay Dispersion, GDD, die zweite Ableitung der Phase nach der Kreisfrequenz) zu bestimmen. Diese GDD kann offensichtlich mittels einer zweifachen numerischen Ableitung der gemessenen spektralen Phase bestimmt werden. Die numerische Ableitung ist jedoch bekanntlich ein instabiles numerisches Verfahren, und die Fehlerpropagationsanalyse zeigt, dass kleine Messfehler in der spektralen Phase zu unzulässig hohen Fehlern in der GDD führen können (A. N. Tikhonov and V. Y. Arsenin, "Solutions of Ill-Posed Problems", Wiley <1977>).

Es wäre daher vorteilhaft, die GDD oder zumindest die GD (die einfache Ableitung der spektralen Phase nach der Kreisfrequenz) direkt aus der Messung zu ermitteln, und es ist Aufgabe der Erfindung, dies auf einfache Weise zu ermöglichen.

Zur Lösung dieser Aufgabe sieht die Erfindung ein Verfahren wie eingangs angegeben vor, bei dem ein von einer Strahlungsquelle abgegebener Strahl auf die Probe sowie ein Referenzstrahl auf eine Referenzprobe gerichtet werden und die spektrale Interferenz der beiden Strahlen nach Reflexion an den Proben oder Passieren der Proben mittels eines Spektrographen aufgenommen wird, wobei dieses Verfahren dadurch gekennnzeichnet ist, dass das so erhaltene Interferogramm I(ω) numerisch nach der Kreisfrequenz ω abgeleitet wird, wonach für die so erhaltene Funktion I'(ω) die Nullstellen ωᵢ numerisch als Lösungen der Gleichung I'(ω) = 0 berechnet werden und danach aus den Nullstellen ωᵢ die frequenzabhängige Gruppenverzögerung τ(ω) entsprechend der Gleichung τ(ωₙ) = n/(ωᵢ₊₁ -ωᵢ), mit i = 1,2... und ωₙ = (ωᵢ₊₁ +ωᵢ)/2, berechnet wird.

Dabei ist es weiter einfach möglich, wenn die frequenzabhängige Gruppenverzögerungsdispersion GDD durch numerische Ableitung der Gruppenverzögerung τ(ω) nach der Kreisfrequenz ω berechnet wird.

Auch ist es günstig, wenn durch numerische Integration der Gruppenverzögerung τ(ω) über die Kreisfrequenz die spektrale Phase ermittelt wird. Dabei ist es ferner vorteilhaft, wenn durch Fouriertransformation eines vorgegebenen Spektrums unter Berücksichtigung der ermittelten spektralen Phase die zeitabhängige Phase ermittelt wird; oder wenn durch Fouriertransformation eines vorgegebenen Spektrums unter Berücksichtigung der ermittelten spektralen Phase die zeitabhängige Intensität eines Strahl-Impulses ermittelt wird.

Als Strahlungsquelle bzw. Lichtquelle wird beispielsweise eine Laser(puls)quelle oder eine Glühbirne oder auch eine Leuchtdiode eingesetzt.

Eine vorteilhafte Anwendung der Erfindung zeichnet sich dadurch aus, dass als Probe eine Dünnschicht-Beschichtung auf einem Substrat untersucht wird, wobei die spektrale Interferenz eines von einer Dünnschicht auf einem Substrat reflektierten Strahls mit einem von einem Referenzreflektor reflektierten Strahl aufgenommen wird.

Die erfindungsgemäße Vorrichtung zur Durchführung des vorliegenden Verfahrens, mit einer Interferometereinrichtung mit einer Strahlungsquelle, mit einer Einrichtung, z.B. einem Strahlungsteiler, zur Erzeugung eines Referenzstrahls und eines Messstrahls, und mit einem Spektrographen, ist in entsprechender Weise dadruch gekennzeichnet, dass mit dem Spektographen eine Recheneinheit verbunden ist, welche konfiguriert ist, um ein mit Hilfe des Spektrographen erhaltenes Interferogramm numerisch nach der Kreisfrequenz abzuleiten, wonach für die so erhaltene Funktion I'(ω) die Nullstellen ωᵢ numerisch als Lösungen der Gleichung I'(ω) = 0 berechnet werden und danach aus den Nullstellen ωᵢ die frequenzabhängige Gruppenverzögerung τ(ω) entsprechend der Gleichung τ(ωₙ) = π/ (ωᵢ₊₁ -ωᵢ), mit i = 1, 2 ... und ωₙ = (ωᵢ₊₁ +ωᵢ)/2 (d.h. ωₙ ist der Mittelwert von ωᵢ₊₁ und ωᵢ) berechnet wird.

Dabei ist es von Vorteil, wenn die Recheneinheit überdies eingerichtet ist, um die frequenzabhängige Gruppenverzögerungsdispersion GDD durch numerische Ableitung der Gruppenverzögerung τ(ω) nach der Kreisfrequenz ω zu berechnen.

Weiters ist es günstig, wenn die Recheneinheit eingerichtet ist, um durch numerische Integration der Gruppenverzögerung τ(ω) über die Kreisfrequenz die spektrale Phase zu ermitteln.

Auch ist es vorteilhaft, wenn die Recheneinheit ferner ein Fouriertransformationsmodul aufweist, um durch Fouriertransformation eines vorgegebenen Spektrums unter Berücksichtigung der ermittelten spektralen Phase, die zeitabhängige Phase zu ermitteln; auch kann die Recheneinheit ein Fouriertransformationsmodul aufweisen, um durch Fouriertransformation eines vorgegebenen Spektrums unter Brücksichtigung der ermittelten spektralen Phase, die zeitabhängige Intensität eines Strahl-Impulses zu ermitteln.

Im Fall einer reflektiven Untersuchung einer Probe kann ein Referenzspiegel zur Reflexion des Referenzstrahls vorgesehen sein.

Die Erfindung basiert somit auf einer Technik einer direkten spektralen Auswertung (Direct Spectral Evaluation, DSE), die gegenüber der herkömmlichen, auf der FFT basierenden Methode (s. o. "Interferogram Analysis", D. W. Robinson and G. T. Reid) auch folgende Vorteile hat:
(1) Die Verwendung der FFT ist nicht nötig und die Anzahl der mathematischen Operationen ist viel kleiner; somit ist die DSE-Methode viel schneller. Dadurch, dass die FFT nicht eingesetzt werden muss, ist es auch nicht notwendig, das gemessene Interferogramm zu interpolieren und zu extrapolieren, um die für die FFT notwendigen Bedingungen zu erfüllen. Dadurch ist die Anzahl der Werte, die verarbeitet werden muss, um ungefähr einen Faktor 4 kleiner. Weiters wird die zweifache FFT durch eine numerische Ableitung und eine Interpolation ersetzt. Dadurch ist die DSE-Methode um mindestens einen Faktor 100 schneller als die herkömmliche Methode. Dank dieser Rechengeschwindigkeit kann die Methode in Quasi-Echtzeit zur Charakterisierung der Dispersion in dynamischen Prozessen eingesetzt werden, z.B. zwecks Überwachung des Wachstums der Schichtdicken von dispersiven Spiegeln während des Beschichtungsprozesses.
(2)Das vorgeschlagene Verfahren erlaubt die direkte Auswertung der Gruppenverzögerung (Group Delay, GD, die erste Ableitung der spektralen Phase nach der Kreisfrequenz); somit muss die numerische Ableitung nur ein Mal angewendet werden, um die GDD zu erhalten. Dadurch wird die ungünstige Propagation der Messfehler durch die numerische Ableitung der Phase deutlich verringert.

Die Erfindung wird nachfolgend anhand von bevorzugten Ausführungsbeispielen und unter Bezugnahme auf die Zeichnung noch weiter erläutert. Es zeigen:
Fig.1 ein Beispiel eines spektralen Interferogramms, nämlich der Intensität I(ω), in beliebigen Einheiten, über der Wellenlänge λ (in nm);
Fig. 2 die Ableitung I'(ω) dieses Interferenzsignals I(ω) nach der Kreisfrequenz, also I'(ω) = dI/dω, über der Kreisfrequenz ω (in rad/fs);
Fig. 3 in einem Diagramm die aus dem Interfrenzsignal I(ω) von Fig. 1 berechnete Gruppenverzögerung τ(in fs) über der Kreisfrequenz ω;
Fig. 4 in einem Diagramm die aus dem Interferenzsignal I(ω) berechnete Gesamt- Gruppenverzögerungsdispersion GDDₜ (in fs²) über der Wellenlänge λ(in nm);
Fig. 5 in einem Diagramm die aus I(ω) berechnete Gruppenverzögerung GDDₛ, die von einem Musterspiegel pro Reflexion herbeigeführt wird; und
Fig. 6 schematisch eine Vorrichtung mit einem Interferometer.

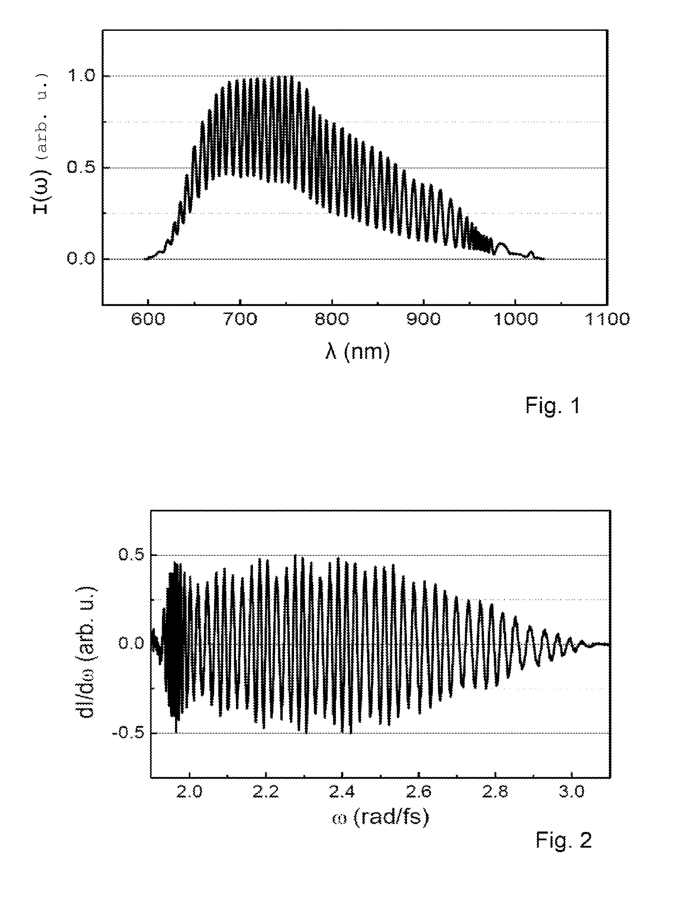

Fig. 1 zeigt ein typisches spektrales Interferogramm, d.h. Interferenzsignal I(ω), und zwar in beliebigen Einheiten ("arb. u." - arbitrary units). Dieses spektrale Interferenzsignal I(ω) wird nach der Kreisfrequenz ω abgeleitet. Die dadurch entstehende Funktion I'(ω) ist in Fig. 2 anhand des Beispielspektrums aus Fig. 1 dargestellt. Die Nulldurchgänge ωᵢ der Funktion I'(ω) (d.h. ωᵢ = alle Lösungen der Gleichung I'(ω)= 0 in dem für die Messung relevanten Frequenzbereich) werden mittels eines an sich bekannten numerischen Algorithmus (z.B. durch lineare oder nichtlineare Interpolation) ermittelt.

Aus den Kreisfrequenzwerten ωᵢ wird die Gruppenverzögerung τ als Funktion der Kreisfrequenz ω wie folgt berechnet: τ(ωₙ)= π/(ωᵢ₊₁-ωᵢ), mit ωₙ= (ωᵢ₊₁+ωᵢ)/2.

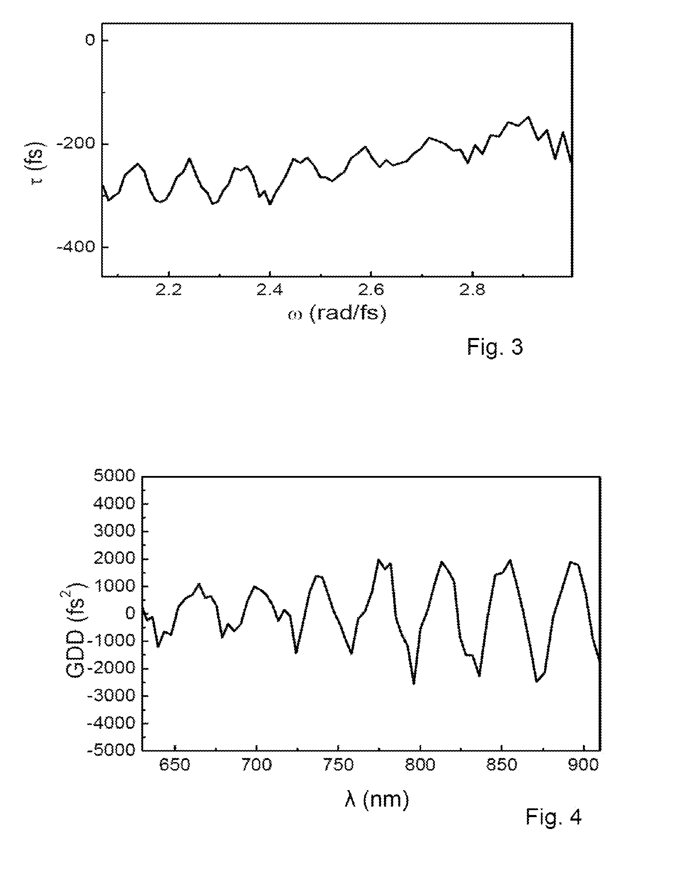

Die auf diese Weise aus dem in Fig.1 abgebildeten Interferogramm berechneten Gruppenverzögerungswerte τ sind in Fig. 3 dargestellt.

Falls für die Anwendung nötig, kann aus der Gruppenverzögerung τ mittels numerischer Ableitung die Gruppenverzögerungsdispersion GDD berechnet werden. Diese GDD ist für das in Fig. 1 abgebildete Interferogramm in Fig. 4 dargestellt.

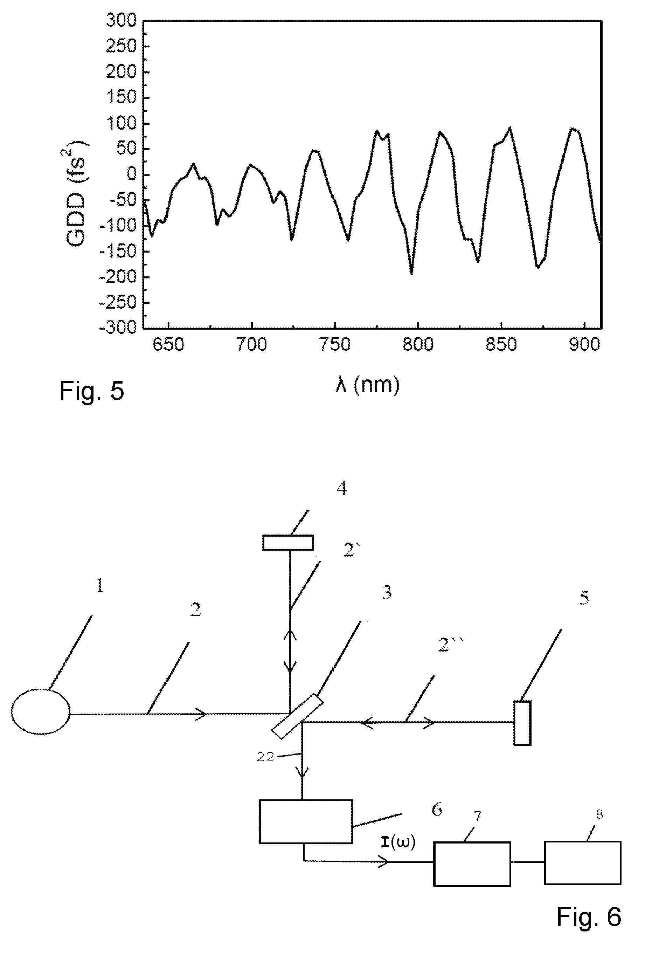

Aufgrund des Aufbaus des Weisslichtinterferometers, das für die hier gezeigte Messung eingesetzt wurde, setzt sich die Gesamtdispersion GDDₜ wie folgt zusammen: GDDₜ=16*GDDₛ+2*GDD_{FS}, wobei GDDₛ die Dispersion ist, die bei der Reflexion auf einem Musterspiegel herbeigeführt wird, ist und GDD_{FS} die Dispersion einer Glasplatte aus Quarzglas (Fused Silica) mit einer Dicke von 6,35 mm ist. Somit kann die Dispersion des Musterspiegels GDDₛ (die für eine Reflexion herbeigeführt wird) wie folgt berechnet werden: GDDₛ=(GDDₜ-2*GDD_{FS})/16. Die dadurch erhaltene Dispersion GDDₛ des zu charakterisierenden Musterspiegels ist in Fig. 5 dargestellt.

Fig.6 zeigt eine mögliche Ausführung eines Michelson-Interferometers zur Erzeugung des Interferogramms I(ω). Sowohl diese Ausbildung als auch andere Ausführungen eines Michelson-Interferometers (z.B. mit mehrfachen Reflexionen auf dem Musterspiegel) als auch andere, an sich bekannte Arten von Interferometern (wie z.B. Mach-Zender-Interferometer) können eingesetzt werden, beispielsweise um - gemäß Fig. 6 - einen Spiegel 5 zu messen.

Im einzelnen zeigt Fig. 6 beispielhaft eine schematische Darstellung eines Michelson-Interferometers für spektrale Interferometrie, wobei ein mit einer Lichtquelle 1 erzeugter Strahl 2 mittels eines Strahlteilers 3 geteilt wird. Ein Referenzstrahl 2' wird mittels eines als Rückreflektor eingesetzten Referenzspiegels 4 (dessen Dispersionseigenschaften gut bekannt sind) reflektiert. Ein Messstrahl 2'' wird von dem zu messenden Spiegel 5 reflektiert. Der Spiegel 5 kann auch als mehrfacher Faltspiegel eingebaut werden, um die dadurch herbeigeführte GDD und somit die Messgenauigkeit zu erhöhen. Der Referenzstrahl 2' und der Messstrahl 2'' werden mittels des Strahlteilers 3 wieder in räumliche Überlagerung gebracht, s. Strahl 22. Von diesem Strahl 22 wird das spektrale Interferogramm mittels eines Spektrographen 6 aufgenommen.

Aus dem so erhaltenen Interferenzsignal I(ω) kann die Differenz zwischen der Gruppenverzögerung des Referenzstrahles 2' und der Gruppenverzögerung des Messstrahles 2'' wie oben erläutert berechnet werden. Hierzu ist eine entsprechend konfigurierte Recheneinheit 7 an den Spektrographen 6 angeschlossen; die Ergebnisse, z. B. GD, GDD usw., werden mittels einer Ausgabeeinheit 8 ausgegeben, z.B. angezeigt und/oder ausgedruckt.

Dank der hohen Mess- und Auswertungsgeschwindigkeit kann die beschriebene Technik z.B. zur Überprüfung eines Beschichtungsvorgangs bei einer Dünnschichtbeschichtung eines Substrats, etwa bei der Herstellung eines dispersiven Spiegels, in Echtzeit währen des Beschichtungsvorgangs verwendet werden.

## Patentansprüche

1. Verfahren zur Ermittlung zumindest der Gruppenverzögerung einer Probe mittels spektraler Interferometrie, wobei ein von einer Strahlungsquelle (1) abgegebener Strahl (2'') auf die Probe (5) sowie ein Referenzstrahl (2') auf eine Referenzprobe (4) gerichtet werden und die spektrale Interferenz der beiden Strahlen nach Reflexion an den Proben oder Passieren der Proben mittels eines Spektrographen (6) aufgenommen wird, **dadurch gekennzeichnet, dass** das so erhaltene Interferogramm I(ω) numerisch nach der Kreisfrequenz ω abgeleitet wird, wonach für die so erhaltene Funktion I'(ω) die Nullstellen ωᵢ numerisch als Lösungen der Gleichung I'(ω) = 0 berechnet werden und danach aus den Nullstellen ωᵢ die frequenzabhängige Gruppenverzögerung τ(ω) entsprechend der Gleichung τ(ωₙ) = π/ (ωᵢ₊₁ ωᵢ), mit i = 1, 2 ... und ωₙ = (ωᵢ₊₁ + ωᵢ)/2, berechnet wird.

2. Verfahren nach Anspruch 1, **dadurch gekennzeichnet, dass** weiter die frequenzabhängige Gruppenverzögerungsdispersion (GDD) durch numerische Ableitung der Gruppenverzögerung τ(ω) nach der Kreisfrequenz ω berechnet wird.

3. Verfahren nach Anspruch 1, **dadurch gekennzeichnet, dass** durch numerische Integration der Gruppenverzögerung τ(ω) über die Kreisfrequenz die spektrale Phase ermittelt wird.

4. Verfahren nach Anspruch 3, **dadurch gekennzeichnet, dass** durch Fouriertransformation eines vorgegebenen Spektrums unter Berücksichtigung der ermittelten spektralen Phase die zeitabhängige Phase ermittelt wird.

5. Verfahren nach Anspruch 3, **dadurch gekennzeichnet, dass** durch Fouriertransformation eines vorgegebenen Spektrums unter Berücksichtigung der ermittelten spektralen Phase die zeitabhängige Intensität eines Strahl-Impulses ermittelt wird.

6. Verfahren nach einem der Ansprüche 1 bis 5, **dadurch gekennzeichnet, dass** als Strahlungsquelle (1) eine Laserpulsquelle oder eine Glühbirne oder auch eine Leuchtdiode verwendet wird.

7. Verfahren nach einen der Ansprüche 1 bis 6, **dadurch gekennzeichnet, dass** als Probe (5) eine Dünnschicht-Beschichtung auf einem Substrat untersucht wird, wobei die spektrale Interferenz eines von einer Dünnschicht auf einem Substrat reflektierten Strahls (2'') mit einem von einem Referenzreflektor (4) reflektierten Strahl (2') aufgenommen wird.

8. Vorrichtung zur Durchführung eines Verfahrens nach einem der Ansprüche 1 bis 7, mit einer Interferometereinrichtung mit einer Strahlungsquelle (1), mit einer Einrichtung (3) zur Erzeugung eines Referenzstrahls (2') und eines Messstrahls (2''), und mit einem Spektrographen (6), **dadurch gekennzeichnet, dass** mit dem Spektrographen (6) eine Recheneinheit (7) verbunden ist, welche konfiguriert ist, um ein mit Hilfe des Spektrographen (6) erhaltenes Interferogramm I(ω) numerisch nach der Kreisfrequenz ω abzuleiten, wonach für die so erhaltene Funktion I'(ω) die Nullstellen ωᵢ numerisch als Lösungen der Gleichung I'(ω) = 0 berechnet werden und danach aus den Nullstellen ωᵢ die frequenzabhängige Gruppenverzögerung τ(ω) entsprechend der Gleichung τ(ωₙ) = π/ (ωᵢ₊₁ - ωᵢ), mit i = 1, 2 ... und ωₙ = (ωᵢ₊₁ + ωᵢ)/2, berechnet wird.

9. Vorrichtung nach Anspruch 8, **dadurch gekennzeichnet, dass** die Recheneinheit (7) überdies eingerichtet ist, um die frequenzabhängige Gruppenverzögerungsdispersion GDD durch numerische Ableitung der Gruppenverzögerung τ(ω) nach der Kreisfrequenz ω zu berechnen.

10. Vorrichtung nach Anspruch 8 oder Anspruch 9, **dadurch gekennzeichnet, dass** die Recheneinheit (7) eingerichtet ist, um durch numerische Integration der Gruppenverzögerung τ(ω) über die Kreisfrequenz die spektrale Phase zu ermitteln.

11. Vorrichtung nach Anspruch 10, **dadurch gekennzeichnet, dass** die Recheneinheit (7) ferner ein Fouriertransformationsmodul aufweist, um durch Fouriertransformation eines vorgegebenen Spektrums unter Berücksichtigung der ermittelten spektralen Phase die zeitabhängige Phase zu ermitteln.

12. Vorrichtung nach Anspruch 10, **dadurch gekennzeichnet, dass** die Recheneinheit (7) ein Fouriertransformationsmodul aufweist, um durch Fouriertransformation eines vorgegebenen Spektrums unter Berücksichtigung der ermittelten spektralen Phase die zeitabhängige Intensität eines Strahl-Impulses zu ermitteln.

13. Vorrichtung nach einem der Ansprüche 8 bis 12, **dadurch gekennzeichnet, dass** als Strahlungsquelle (1) eine Laserpulsquelle oder eine Glühbirne oder auch eine Leuchtdiode vorgesehen ist.

14. Vorrichtung nach einem der Ansprüche 8 bis 13, **gekennzeichnet durch** einen Referenzspiegel (4) zur Reflexion des Referenzstrahls (2').

15. Vorrichtung nach einem der Ansprüche 8 bis 14, **dadurch gekennzeichnet, dass** die Einrichtung zur Erzeugung eines Referenzstrahls (2') und eines Messstrahls (2'') durch einen Strahlungsteiler gebildet ist.

## Claims

1. A method for determining at least the group delay of a sample by means of spectral interferometry, wherein a beam (2") emitted from a radiation source (1) is directed onto the sample (5) and a reference beam (2') is directed onto a reference sample (4) and the spectral interference of the two beams after reflection at the samples or passing the samples is recorded by means of a spectrograph (6), **characterised in that** the thus-obtained interferogramme I(ω) is numerically derived according to the angular frequency ω, whereupon the zeroes ωᵢ are numerically calculated for the thus-obtained function I'(ω) as solutions of the equation I'(ω) = 0 and then the frequency-dependent group delay τ(ω) is calculated from the zeroes ωᵢ in accordance with the equation τ(ωₙ) = π/ (ωᵢ₊₁-ωᵢ), where i = 1,2... and ωₙ = (ωᵢ₊₁+ωᵢ)/2.

2. The method according to claim 1, **characterised in that** the frequency-dependent group delay dispersion (GDD) is calculated by numerical derivation of the group delay τ(ω) according to the angular frequency ω.

3. The method according to claim 1, **characterised in that** the spectral phase is determined by numerical integration of the group delay τ(ω) over the angular frequency.

4. The method according to claim 3, **characterised in that** the time-dependent phase is determined by means of Fourier transform of a predetermined spectrum, taking the determined spectral phase into account.

5. The method according to claim 3, **characterised in that** the time-dependent intensity of a beam pulse is determined by Fourier transform of a predetermined spectrum, taking the determined spectral phase into account.

6. The method according to any one of claims 1 to 5, **characterised in that** a laser pulse source or a light bulb or else a light emitting diode is used as radiation source (1).

7. The method according to any one of Claims 1 to 6, **characterised in that** a thin-layer coating on a substrate is investigated as a sample (5), wherein the spectral interference of a beam (2") reflected by a thin layer on a substrate with a beam (2') reflected by a reference reflector (4)is recorded.

8. A device for carrying out a method according to any one of Claims 1 to 7, having an interferometer apparatus having a radiation source (1), having means (3) for generating a reference beam (2') and a measuring beam (2"), and having a spectrograph (6), **characterised in that** a computing unit (7) is connected to the spectrograph (6), which computing unit is configured to numerically derive an interferogramme I(ω), which is obtained with the aid of the spectrograph (6), according to the angular frequency ω, whereupon the zeroes ωᵢ are numerically calculated for the thus-obtained function I'(ω) as solutions of the equation I'(ω) = 0 and then the frequency-dependent group delay τ(ω) is calculated from the zeroes ωᵢ in accordance with the equation τ(ωₙ) = n/(ωᵢ₊₁-ωᵢ), where i = 1,2... and ωₙ = (ωᵢ₊₁ +ωᵢ)/2.

9. The device according to claim 8, **characterised in that** the computing unit (7) is furthermore set up to calculate the frequency-dependent group delay dispersion GDD by numerically deriving the group delay τ(ω) according to the angular frequency ω.

10. The device according to claim 8 or Claim 9, **characterised in that** the computing unit (7) is set up to determine the spectral phase by numerical integration of the group delay τ(ω) over the angular frequency.

11. The device according to claim 10, **characterised in that** the computing unit (7) furthermore has a Fourier transform module, in order to determine the time-dependent phase by means of Fourier transform of a predetermined spectrum, taking the determined spectral phase into account.

12. The device according to claim 10, **characterised in that** the computing unit (7) has a Fourier transform module, in order to determine the time-dependent intensity of a beam pulse by Fourier transform of a predetermined spectrum, taking the determined spectral phase into account.

13. The device according to any one of claims 8 to 12, **characterised in that** a laser pulse source or a light bulb or else a light emitting diode is provided as radiation source (1).

14. The device according to any one of claims 8 to 13, **characterised by** a reference mirror (4) for reflecting the reference beam (2').

15. The device according to any one of claims 8 to 14, **characterised in that** the means for creating a reference beam (2') and a measuring beam (2") is formed by a radiation splitter.

## Revendications

1. Procédé de détermination d'au moins le retard du groupe d'une sonde à l'aide d'une interférométrie spectrale, un faisceau (2'') émis par une source de rayonnement (1) étant orienté vers la sonde (5) ainsi qu'un faisceau de référence (2') vers une sonde de référence (4) et l'interférence spectrale des deux faisceaux étant enregistrée après réflexion au niveau des sondes ou passage des sondes à l'aide d'un spectrographe (6), **caractérisé en ce que** l'interférogramme I(ω) ainsi obtenu est dérivé numériquement selon la fréquence angulaire ω, les fréquences d'inversion d'intensité ωᵢ étant ensuite calculés numériquement, pour la fonction I'(ω), en tant que solutions de l'équation I'(ω) = 0 puis, à partir des passages à zéro ωᵢ, le retard de groupe en fonction de la fréquence τ(ω) étant calculé en fonction de l'équation τ(ωₙ) = n / (ωᵢ₊₁ - ωᵢ), avec i = 1, 2 ... et ωₙ = (ωᵢ₊₁ + ωᵢ) / 2.

2. Procédé selon la revendication 1, **caractérisé en ce que** la dispersion du retard de groupe en fonction de la fréquence (GDD) est en outre calculée par dérivation numérique du retard de groupe τ(ω) selon la fréquence angulaire ω.

3. Procédé selon la revendication 1, **caractérisé en ce que** l'intégration numérique du retard de groupe τ(ω) sur la fréquence angulaire permet de déterminer la phase spectrale.

4. Procédé selon la revendication 3, **caractérisé en ce que** la transformation de Fourier d'un spectre prédéterminé permet de déterminer la phase en fonction du temps en tenant compte de la phase spectrale déterminée.

5. Procédé selon la revendication 3, **caractérisé en ce que** la transformation de Fourier d'un spectre prédéterminé permet de déterminer l'intensité en fonction du temps d'une impulsion de faisceau en tenant compte de la phase spectrale déterminée.

6. Procédé selon l'une des revendications 1 à 5, **caractérisé en ce que**, en tant que source de rayonnement (1), une source d'impulsion laser, une ampoule incandescente ou une diode luminescente est utilisée.

7. Procédé selon l'une des revendications 1 à 6, **caractérisé en ce que**, en tant que sonde (5), un revêtement en couche mince sur un substrat est examiné, l'interférence spectrale d'un faisceau (2'') réfléchi par une couche mince sur un substrat étant enregistrée avec un faisceau (2') réfléchi par un réflecteur de référence (4).

8. Dispositif d'exécution d'un procédé selon l'une des revendications 1 à 7, avec un dispositif d'interféromètre avec une source de rayonnement (1), avec un dispositif (3) pour la production d'un faisceau de référence (2') et d'un faisceau de mesure (2'') et avec un spectrographe (6), **caractérisé en ce que**, avec le spectrographe (6), une unité de calcul (7) est reliée, qui est conçue pour dériver numériquement un interférogramme I(ω) obtenu à l'aide du spectrographe (6) selon la fréquence angulaire ω, les fréquences d'inversion d'intensité ωᵢ étant ensuite calculés numériquement, pour la fonction I'(ω), en tant que solutions de l'équation I'(ω) = 0 puis, à partir des passages à zéro ωᵢ, le retard de groupe en fonction de la fréquence T(ω) étant calculé en fonction de l'équation τ(ωₙ) = n / (ωᵢ₊₁ - ωᵢ), avec i = 1, 2 ... et ωₙ = (ωᵢ₊₁ + ωᵢ) / 2.

9. Dispositif selon la revendication 8, **caractérisé en ce que** l'unité de calcul (7) est en outre conçue pour calculer la dispersion du retard de groupe en fonction de la fréquence GDD par dérivation numérique du retard de groupe τ(ω) selon la fréquence angulaire ω.

10. Dispositif selon la revendication 8 ou la revendication 9, **caractérisé en ce que** l'unité de calcul (7) est conçue pour déterminer la phase spectrale par intégration numérique du retard de groupe τ(ω) sur la fréquence angulaire.

11. Dispositif selon la revendication 10, **caractérisé en ce que** l'unité de calcul (7) comprend en outre un module de transformation de Fourier, afin de déterminer la phase en fonction du temps par transformation de Fourier d'un spectre prédéterminé en tenant compte de la phase spectrale déterminée.

12. Dispositif selon la revendication 10, **caractérisé en ce que** l'unité de calcul (7) comprend en outre un module de transformation de Fourier, afin de déterminer l'intensité en fonction du temps d'une impulsion de faisceau par transformation de Fourier d'un spectre prédéterminé en tenant compte de la phase spectrale déterminée.

13. Dispositif selon l'une des revendications 8 à 12, **caractérisé en ce que**, en tant que source de rayonnement (1), une source d'impulsion laser ou une ampoule incandescente ou une diode luminescente est prévue.

14. Dispositif selon l'une des revendications 8 à 13, **caractérisé par** un miroir de référence (4) pour la réflexion du faisceau de référence (2').

15. Dispositif selon l'une des revendications 8 à 14, **caractérisé en ce que** le dispositif de production d'un faisceau de référence (2') et d'un faisceau de mesure (2'') est constitué d'un diviseur de faisceau.
